# EUROPEAN PATENT APPLICATION

(11) **EP 1 215 018 A1**
(43) Date of publication of application: **19.06.2002**
(21) Application number: 01129481.6
(22) Date of filing: 11.12.2001
(51) Int. Cl.: B25J 15/04

(54) **Device for connecting a tool on a robot arm using balls as locking members**

(30) Priority: 13.12.2000 IT TO001153
(71) Applicant: COM.IMP.EX. di Elio Strobietto, 10139 Torino (IT)
(72) Inventor: Strobietto, Elio, 10139 Torino (IT)
(74) Representative: Di Francesco, Gianni

(57) **Abstract**

The present invention refers to a device for connecting a tool with a robot arm. The device includes a cylindrical body (5) with an axial hole inside which a piston (25) slides inside a hollow cylindrical element (15) designed to hold at least two metal balls (17) housed in its wall by means of radial through-holes (37), so that said piston moves the balls radially in order to push them fully against a ring element(42) connected to the tool to be fixed.

## Description

The invention refers to an automatic tool-replacing device for industrial robots, intended to replace tools connected to the robot arm.

Industrial robots are machines widely used in association with machine tools in order to carry out automatic processing or assembly operations. They thus contribute to speed up the processing and to increase the efficiency of the whole industrial installation.

Robots are therefore intended for performing operations by means of the hand (tool) which is fixedly connected to the free end of the robot arm. This connection is to be carried out automatically and quickly so that the time for replacing tools, and therefore the overall processing time, is shortened. The connection device should then be both reduced in dimension in order to allow fast operation, and strong enough to be capable of supporting heavy loads without being damaged or jamming up in its open or closed position.

A connection device consisting of a cylindrical body with an axial cylindrical hole is already known from Patent US4549846. Inside the cylindrical body there is a piston sliding inside said hole, the piston being controlled by means of the fluid introduced under pressure into an oil-tight chamber which is located between the cylindrical body and the piston itself. The piston end opposite to the chamber slides inside a hollow cylindrical element retaining metal balls, so that it moves these balls radially and pushes them against a conical surface obtained inside a pipe-like element connected to the tool to be fixed, and which is inserted into the cylindrical body hole inside the element retaining the balls, in order to connect the tool to the robot arm.

A considerable drawback of this device is due to the fact that the wall of the hollow cylindrical element - which retains the balls - is too thin, and is, therefore, subject to possible deformations in case of heavy loads handled by the robot arm. Said deformation can make it impossible to replace the tool which instead remains stuck on the arm.

It is an object of the present invention to provide a connecting device that overcomes the above mentioned disadvantage.

Said object is achieved by means of an automatic tool-replacing device for industrial robots that presents the characteristics set forth in claim 1.

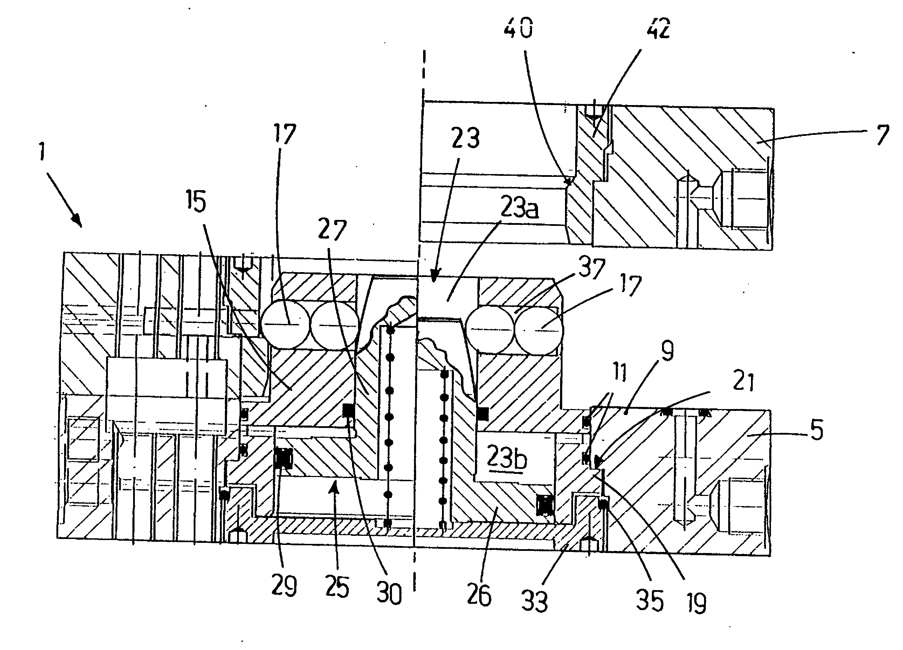

Additional features and advantages will become more clear from the following description referring to the appended drawing provided as a non-restrictive example and showing an axial section view of the automatic tool-replacing device, with the locking system in two operating positions.

With reference to the figure, reference number 1 indicates an overall 1 automatic tool-replacing device for the arm of industrial robots, consisting of a replacing unit, or main plate 5 and of an adapter, or tool plate 7. The main plate 5 consists of a hollow cylindrical body 9 in which a cylindrical element 15 for the support of metal balls 17 is inserted being kept tight by means of ring gaskets 11. Said element 15 is provided with a ring-shaped projection 19 on its side wall, the projection being adapted to lay against a step 21 made inside the hollow body 9.

The cylindrical element 15 features an axial cylindrical cavity 23 presenting two different diameters limiting a first part 23a of a larger diameter and a second part 23b the diameter of which is basically at least 1/3 smaller than the one of the first part.

A locking piston 25 of axial overturned-T section, the diameter of the head of the T 26 being substantially equal to the diameter of part 23b of the cavity 23, and the diameter of the stem of the T stem 27 being substantially the same as the diameter of part 23a of the cavity 23, is positioned inside the cavity 23.

The piston 25 is tightly inserted into the cavity 23 by means of gaskets 29, 30. The piston is adapted to slide inside it from a first position in which its head is in contact with a base 33 provided with gasket 35 tightly closing the cylindrical cavity of the body 5 at one side (right-hand side of the figure), to a second operating position in which the head is near the beginning of the part of smaller diameter 23a (left-hand side of the figure). The free end of the piston rod 27, not connected to the head 26, presents a tapered end.

A protruding part of the element supporting the balls is substantially equal to, or larger than, the thickness of the hollow body 5 and near the end of this protruding part there are at least two radial through-holes 37, arranged in star position. These through-holes, starting from the outer wall, reach the cavity section 23a; each one of the through holes is adapted to house at least two sliding metal balls 17. Their last part, in correspondence with the outer wall, presents a smaller diameter so as to prevent the balls, whose diameter is the same as the one of said holes 37, from coming out.

The thickness of the wall of element 15 shall depend on the number of balls located in each one of the radial holes 37 being anyway calculates as to be smaller than the sum of the diameters of the balls located inside each hole. The length of the piston rod 25 and its tapered end must be calculated in such way that, when it is in the first position, the balls are free to protrude inside the cavity 23 though remaining in contact with the rod 27.

When the piston is in its second position, i.e. after having pushed by a fluid introduced under pressure, through special passages, into the chamber limited by the part 23b, the piston head 26 and the base 33, the balls, being pushed by the wall of the rod 27 which has translated, are forced to protrude from the holes 37 on the outer wall of the hollow element 15. After the plate has been inserted onto the main plate 5, fitting on the protruding body 15, the balls, protruding from the wall, become engaged against a ring-like projection 40, of trapezoidal section, which is formed inside a ring 42 screwed in or fitted inside the tool plate 7. The tool-holding plate is thus kept on the main plate, with no chances of accidental release. In order to release the tool holding plate, it will be sufficient to introduce fluid under pressure into the space between the part 23b, the head 26 and the body 15, so that the piston 25 is pushed back to its first position allowing the balls 17 to go back flush with the outer wall of the body 15, so that they no longer become engaged against the projection 40.

## Claims

1. Device intended to connect a tool to a robot arm, including a cylindrical body (5) with an axial hole inside which a piston (25) slides, said piston being actuated by fluid introduced under pressure into an oil-tight chamber, said piston sliding inside a hollow cylindrical element (15) designed to hold metal balls (17) housed in its wall by means of radial through-holes (37), so that said piston moves the balls radially in order to push them fully against a conical surface (40) which is obtained inside a ring-like element (42) connected to the tool to be fixed, which fits on the cylindrical element (15) retaining the metal balls and located inside the hole of the cylindrical body (5), **characterized in that** the metal balls (17) housed in the wall of the hollow cylindrical element (15) are at least two for each radial through-hole (37).

2. Device as claimed in claim 1, **characterized in that** the thickness of the wall of the hollow cylindrical element (15) is smaller than the sum of the diameters of the balls (17) located inside each radial through-hole (37) obtained in said wall.

3. Device as claimed in claim 1, **characterized in that** at least two radial through-holes (37) are located on the same plane.
